# EUROPÄISCHE PATENTSCHRIFT

(11) **EP 3 672 748 B1**
(45) Veröffentlichungstag und Bekanntmachung des Hinweises auf die Patenterteilung: **01.11.2023**
(21) Anmeldenummer: 18766113.7
(22) Anmeldetag: 23.08.2018
(51) Int. Cl.: B23B 31/165, B23B 31/28, B23B 31/40

(54) **VORRICHTUNG ZUM KLEMMEN EINES WERKSTÜCKS**
DEVICE FOR CLAMPING A WORKPIECE
DISPOSITIF DE SERRAGE D'UNE PIÈCE À USINER

(30) Priorität: 25.08.2017 AT 507122017
(43) Veröffentlichungstag der Anmeldung: 01.07.2020
(73) Patentinhaber: MOST Technik GmbH, 4817 St. Konrad (AT)
(72) Erfinder: MOSER, Friedrich, 4644 Scharnstein (AT)
(74) Vertreter: Hübscher & Partner Patentanwälte GmbH
(86) Internationale Anmeldenummer: PCT/AT2018/050018
(87) Internationale Veröffentlichungsnummer: WO 2019/036734

(56) Entgegenhaltungen:
- EP-A2- 0 314 945
- DE-A1-102010 018 342
- DE-A1-102010 033 859
- GB-A- 1 131 092
- GB-A- 2 018 638
- GB-A- 2 498 061
- US-A- 1 699 359
- US-A- 1 713 797
- US-A- 2 867 441
- US-A- 5 464 233

## Beschreibung

### Technisches Gebiet

Die Erfindung bezieht sich auf eine Vorrichtung zum Klemmen eines Werkstücks gemäß dem Oberbegriff des Anspruchs 1. Eine solche Vorrichtung ist aus GB 2 498 061 A bekannt.

### Stand der Technik

Zum Richten von Werkstücken mit einer ausgeprägten Längsachse, wie Stäbe, Stangen, Profile und Rohre, kann das endseitig in Aufnahmeköpfen geklemmte Werkstück mithilfe der Aufnahmeköpfe in sich zumindest in vorgegebenen Winkelbereichen ändernden Richtungen ausgebogen und wieder zurückgebogen werden, indem die die beiden Enden des Werkstücks klemmenden Aufnahmeköpfe nicht nur um ihre Längsachse gedreht, sondern zusätzlich um eine dazu senkrechte Schwenkachse verschwenkt werden. Die endseitige Werkstückklemmung in den Aufnahmeköpfen stellt allerdings hohe Ansprüche hinsichtlich der Aufnahme der auftretenden großen Belastungskräfte und der Spannweite der Klemmbacken, die ja Werkstücke mit einem vergleichsweise weiten Durchmesserbereich sicher klemmen sollen. Übliche Spannfutter sind daher für einen solchen Einsatzzweck ungeeignet. Um bei Spannfuttern mit durch einen Klemmantrieb betätigbaren Klemmbacken eines drehend antreibbaren Aufnahmekopfs die Spannweite der Klemmbacken in einem weiten Bereich einstellen zu können, ist es bekannt (US 4 482 163 A), für die radiale Einstellung der Klemmbacken Schraubtriebe vorzusehen, die über ein durch die hohle Antriebswelle des Aufnahmekopfs antreibbares, zentrales Tellerrad betätigt werden, das mit den Schraubtrieben zugehörigen Kegelrädern kämmt. Durch die Schraubtriebe werden die Klemmbacken in Rahmen verlagert, die radial verschiebbar im Aufnahmekopf geführt und mithilfe von Umlenkhebeln durch eine hydraulisch betätigbare Schubstange beaufschlagt werden. Dieser Klemmantrieb wirkt somit auf die Rahmen, in denen die Klemmbacken durch die Schraubtriebe zur Einstellung der jeweils geforderten Spannweite radial verlagert werden. Die Klemmbacken müssen daher für den Klemmvorgang verschiebefest in den Rahmen gehalten werden, was dadurch erreicht wird, dass das für den gemeinsamen Antrieb der Schraubtriebe vorgesehene Tellerrad durch eine Verriegelungseinrichtung drehfest mit dem Aufnahmekopf verbunden wird. Abgesehen davon, dass sich durch gesonderte, im Aufnahmekopf radial verschiebbar gelagerte und mit dem Klemmantrieb verbundene Rahmen zur Aufnahme der Klemmbacken und durch die radiale Verlagerung der Klemmbacken in den Rahmen mithilfe von Schraubtrieben ein erheblicher Konstruktionsaufwand ergibt, müssen insbesondere die durch den Klemmantrieb durch Umlenkhebel bedingten Beschränkungen hinsichtlich der Klemmkräfte in Kauf genommen werden.

Darüber hinaus sind Klemmvorrichtungen mit einem durch einen Antriebsmotor antreibbaren Aufnahmekopf bekannt (EP 0 554 685 A1, DE 28 16 163 A1), der radial verschiebbare, gemeinsam über je einen Spindeltrieb antreibbare Klemmbacken aufweist, wobei der Drehantrieb für die Spindeltriebe ein durch einen gesonderten Antriebsmotor antreibbares Zentralrad umfasst. Der Drehantrieb für das Zentralrad ist mit einer Schaltkupplung versehen, mit deren Hilfe die Antriebsverbindung zwischen dem Antriebsmotor und dem Zentralrad unterbrochen werden kann, sodass sich das Zentralrad beim Antrieb des Aufnahmekopfs antriebslos mit dem Aufnahmekopf mitdrehen und damit die eingestellte Klemmstellung der Klemmbacken halten kann, allerdings mit dem Nachteil, dass die Klemmstellung der Klemmbacken nach der Entkopplung des Zentralrads von seinem Antrieb nicht mehr bestimmt werden kann. Es ist daher weder eine Überprüfung noch eine Änderung der Klemmkraft während des Antriebs des Aufnahmekopfs möglich.

### Darstellung der Erfindung

Der Erfindung liegt somit die Aufgabe zugrunde, eine Vorrichtung zum Klemmen von Werkstücken so auszugestalten, dass den insbesondere bei Aufnahmeköpfen mit einem weiten Spannbereich und großen Klemmkräften auftretenden Anforderungen hinsichtlich der Überprüfung und Änderung der Klemmkräfte vorteilhaft entsprochen werden kann.

Diese Aufgabe wird durch die Merkmale des Anspruchs 1 gelöst.

Um den Vorteil der als Lineartriebe ausgebildeten Klemmtriebe insbesondere hinsichtlich des größeren Spannweitenbereichs und der Klemmkraftaufbringung vorteilhaft nützen zu können, muss eine Betätigung der Lineartriebe durch die Drehung des Aufnahmekopfs um seine Antriebswelle ausgeschlossen werden. Dies gelingt in einfacher Weise dadurch, dass das Zentralrad in der Klemmstellung der Klemmbacken synchron mit dem Aufnahmekopf angetrieben wird. Der synchrone Antrieb des Zentralrads bringt im Vergleich zu einer bloßen Verriegelung des Zentralrads gegenüber dem Aufnahmekopf den Vorteil mit sich, dass bei einer entsprechenden Beaufschlagung des Zentralrads die Klemmkräfte zwischen den Klemmbacken und dem Werkstück in Abhängigkeit von den jeweiligen Anforderungen vorgegeben werden können.

Zum Antrieb des Zentralrads ergeben sich zwei Möglichkeiten, wobei für den Zentralradantrieb jeweils ein gesonderter Antriebsmotor vorzusehen ist. Das Zentralrad kann nämlich über eine starre Antriebsverbindung mit diesem Antriebsmotor verbunden oder durch ein Überlagerungsgetriebe antreibbar sein, das neben der Ausgangswelle zum Antrieb des Zentralrads zwei Eingangswellen aufweist, die einerseits mit dem Antriebsmotor für den Drehantrieb des Aufnahmekopfs und anderseits mit dem Antriebsmotor für das Zentralrad antriebsverbunden sind. Bei einer starren Antriebsverbindung zwischen dem Zentralrad und seinem Antriebsmotor muss der Antriebsmotor so angesteuert werden, dass das Zentralrad synchron mit dem Aufnahmekopf umläuft, wenn das geklemmte Werkstück vom Aufnahmekopf gedreht werden soll. Der Drehwinkel zwischen dem Aufnahmekopf und dem Zentralrad bestimmt somit unter Berücksichtigung der gegebenen Übersetzungsverhältnisse den radialen Stellweg der Klemmbacken.

Wird das Zentralrad mittels eines Überlagerungsgetriebes angetrieben, so können die Übersetzungsverhältnisse so gewählt werden, dass bei Stillstand des Antriebmotors für das Zentralrad das Zentralrad synchron mit dem Aufnahmekopf angetrieben wird. Dies bedeutet, dass der Drehwinkel des Antriebsmotors für das Zentralrad die radiale Verlagerung der Klemmbacken vorgibt, was besonders einfache Einstellbedingungen schafft.

Um hohe Klemmkräfte aufbringen zu können, empfiehlt es sich, die als Spindeltriebe ausgebildeten Linearantriebe durch je ein Getriebe anzutreiben, dessen Antriebswelle ein mit dem Zentralrad kämmendes Zahnrad trägt, sodass einerseits auch für einen Aufnahmekopf mit großer Spannweite für den dann großen radialen Abstand der Getriebe von der Drehachse des Aufnahmekopfs günstige Konstruktionsverhältnisse geschaffen werden und anderseits für den Antrieb der einzelnen Spindeltriebe vorteilhafte Übersetzungsverhältnisse sichergestellt werden können. Als Getriebe für den Spindelantrieb kommen vorzugsweise Schnecken- oder Winkelgetriebe in Frage.

Obwohl das Zentralrad lediglich koaxial zur Drehachse des Aufnahmekopfs gelagert sein muss, ergeben sich besonders einfache Konstruktionsbedingungen, wenn das Zentralrad auf der Antriebswelle des Aufnahmekopfs frei drehbar gelagert ist, weil in diesem Fall ein größeres Platzangebot für den Antrieb der Linearantriebe genützt werden kann.

Bei den für manche Einsatzzwecke erforderlichen hohen Klemmkräften besteht bei hohlen Werkstücken, insbesondere bei dünnwandigen Rohren, die Gefahr, dass die hohlen Werkstücke durch die Klemmbacken eingedrückt werden. Um dieser Gefahr zu begegnen, kann der Aufnahmekopf zusätzliche Spreizbacken zum Innenklemmen der hohlen Werkstücke aufweisen, sodass die Spreizbacken einen Gegenhalter für die Klemmbacken bilden. Zur Betätigung der Spreizbacken kann ein Spreizdorn vorgesehen sein, der beispielsweise axial verstellbar in der Antriebswelle des Aufnahmekopfs gelagert ist.

### Kurze Beschreibung der Erfindung

In der Zeichnung ist der Erfindungsgegenstand beispielsweise dargestellt. Es zeigen
- Fig. 1: eine erfindungsgemäße Vorrichtung zum Klemmen eines Werkstücks in einem schematischen Blockschaltbild,
- Fig. 2: eine der Fig. 1 entsprechende Darstellung einer Konstruktionsvariante einer erfindungsgemäßen Klemmvorrichtung und
- Fig. 3: eine weitere Ausführungsform einer erfindungsgemäßen Klemmvorrichtung ebenfalls in einem schematischen Blockschaltbild.

### Weg zur Ausführung der Erfindung

Eine erfindungsgemäße Klemmvorrichtung weist einen Aufnahmekopf 1 auf, dessen Antriebswelle 2 in einem Gehäuse 3 drehbar gelagert ist und durch einen Antriebsmotor 4 angetrieben wird, und zwar über ein zweistufiges Zahnradgetriebe mit den Getriebestufen 5 und 6. Im Aufnahmekopf 1 sind radial verschiebbar geführte Klemmbacken 7 vorgesehen, die mithilfe eines als Spindeltrieb ausgebildeten Lineartriebs 8 radial verlagert werden können. Die Spindeln 9 sind zu diesem Zweck über ein Winkelgetriebe 10 antreibbar, dessen Antriebswelle ein Zahnrad 11 trägt, das mit einem allen Lineartrieben 8 gemeinsamen Zentralrad 12 kämmt. Dieses Zentralrad 12 ist auf der Antriebswelle 2 des Aufnahmekopfs 1 frei drehbar gelagert und wird von einem Antriebsmotor 13 über ein zweistufiges Zahnradgetriebe mit den Getriebestufen 14 und 15 angetrieben. Wird demnach bei stillstehendem Antriebsmotor 4 für den Aufnahmekopf 1 der Antriebsmotor 13 für die Lineartriebe 8 eingeschaltet, so werden die Klemmbacken 7 durch das gemeinsame Zentralrad 12 entsprechend verstellt, sodass ein Werkstück zwischen den Klemmbacken 7 gespannt werden kann. Wird anschließend der Antriebsmotor 4 für den Aufnahmekopf 1 betätigt, so muss der Antriebsmotor 13 in Abhängigkeit von der Drehzahl des Antriebsmotors 4 so angesteuert werden, dass das Zentralrad 12 synchron mit dem Aufnahmekopf 1 angetrieben wird, weil eine Relativdrehung zwischen Aufnahmekopf 1 und Zentralrad 12 eine Verlagerung der Klemmbacken 7 bewirkt. Der Antriebsmotor 13 für das Zentralrad 12 kann aber im Sinne einer Erhöhung der Klemmkraft angesteuert werden. Die Abstützung der Klemmbacken 7 am Werkstück unterbindet ja eine Relativdrehung zwischen Aufnahmekopf 1 und Zentralrad 12. Die Ansteuerung der Antriebsmotoren 4 und 13 für den Aufnahmekopf 1 und das Zentralrad 12 erfolgt mithilfe einer entsprechenden Steuereinrichtung, die jedoch aus Übersichtlichkeitsgründen nicht dargestellt ist.

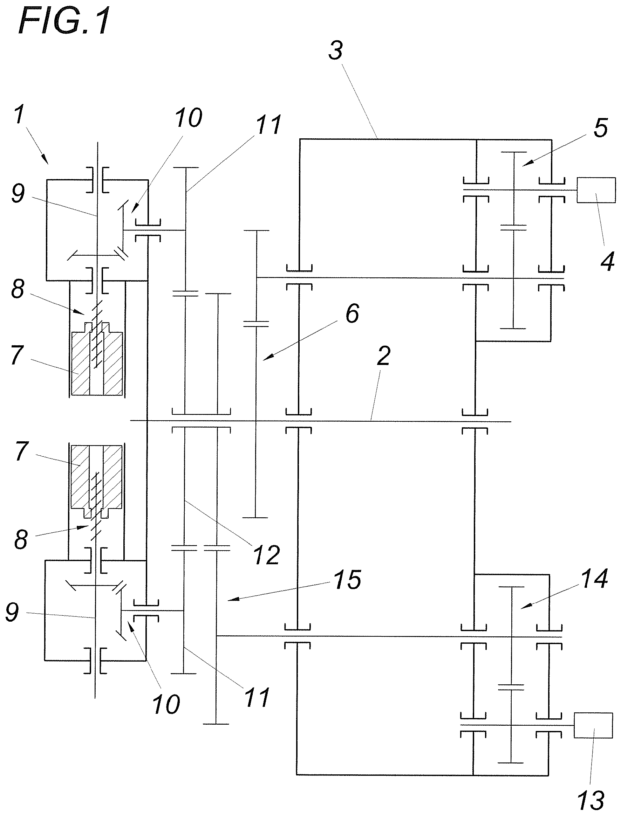

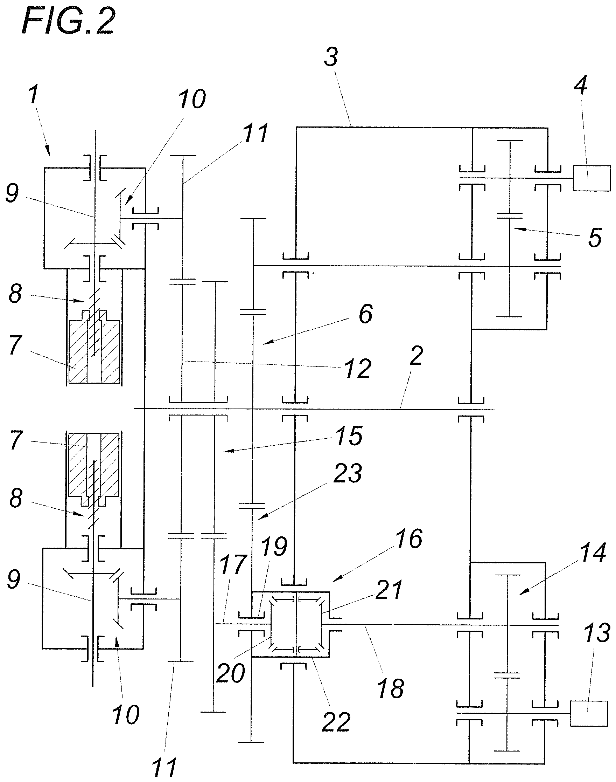

Die Ausführungsform nach der Fig. 2 unterscheidet sich von der Fig. 1 im Wesentlichen nur durch den Drehantrieb für das Zentralrad 12. Zwischen den beiden Getriebestufen 14 und 15 der Antriebsverbindung zwischen Zentralrad 12 und Antriebsmotor 13 ist nämlich ein Überlagerungsgetriebe 16 eingeschaltet, dessen Ausgangswelle 17 die Getriebestufe 15 antreibt und dessen beide Eingangswellen 18 und 19 einerseits von der Getriebestufe 14 und anderseits von der Antriebswelle 2 des Aufnahmekopfs 1 angetrieben werden. Die Übersetzungsverhältnisse sind dabei so gewählt, dass bei Stillstand des Antriebsmotors 13 das Zentralrad 12 mit der Drehzahl des Aufnahmekopfs 1 angetrieben wird. Im dargestellten Ausführungsbeispiel wird die Ausgangswelle 17 von einem Getriebeglied 20 gebildet, während das gegenüberliegende Getriebeglied 21 von der Eingangswelle 18 angetrieben wird. Der die Eingangswelle 19 bildende Steg 22 steht mit der Antriebswelle 2 des Aufnahmekopfs 1 über eine Getriebestufe 23 in Antriebsverbindung. Eine solche Ausbildung des Überlagerungsgetriebes 16 ist jedoch keinesfalls zwingend.

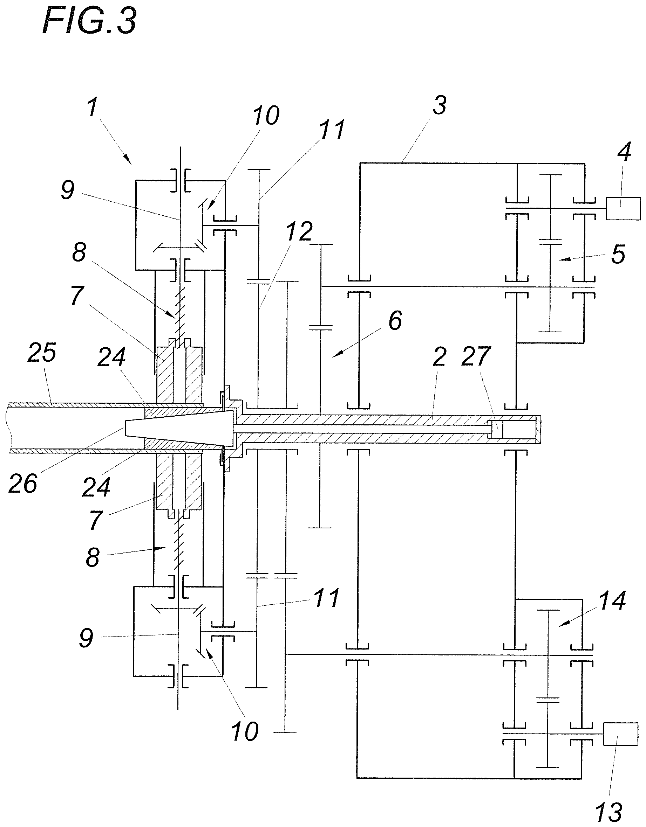

Wie die Fig. 3 erkennen lässt, kann der Aufnahmekopf 1 zusätzlich zu den Klemmbacken 7 zur Außenklemmung eines Werkstücks mit Spreizbacken 24 zum Innenklemmen eines hohlen Werkstücks 25, beispielsweise eines Rohrs, versehen sein. Diese radial verschiebbar im Aufnahmekopf 1 geführten Spreizbacken 24 können mithilfe eines Spreizdorns 26 nach Art eines Keilgetriebes betätigt werden und bilden einen Gegenhalter zu den das Werkstück 25 von außen greifenden Klemmbacken7, sodass das hohle Werkstück 25 nicht durch die Klemmbacken 7 eingedrückt werden kann. Die Spreizbacken 24 sind dabei vorteilhaft schwimmend gelagert, um eine selbständige Zentrierung gegenüber den Klemmbacken 7 sicherzustellen.

Der Spreizdorn 26 kann zu seiner Betätigung innerhalb der hohlen Antriebswelle 2 geführt und mit einem Kolben 27 verbunden sein, der zum Spreizen der Spreizbacken 24 hydraulisch beaufschlagt wird. Für die Verstellung des Spreizdorns 26 kann aber auch ein anderer Stelltrieb eingesetzt werden.

## Patentansprüche

1. Vorrichtung zum Klemmen eines Werkstücks mit einem in einem Gehäuse (3) drehbar gelagerten Aufnahmekopf (1), der an einen Drehantrieb mit einer starren Antriebsverbindung zwischen einem Antriebsmotor (4) und dem Aufnahmekopf (1) angeschlossen ist, mit im Aufnahmekopf (1) radial verstellbaren, mit einem Klemmtrieb verbundenen Klemmbacken (7) zum Außenklemmen des Werkstücks und mit die Klemmbacken (7) verlagernden, den Klemmtrieb bildenden Lineartrieben (8), die durch ein Zahnradgetriebe mit einem zur Antriebswelle (2) des Aufnahmekopfs (1) koaxialen Zentralrad (12) durch einen gesonderten Antriebsmotor (13) gemeinsam antreibbar sind, wobei das Zentralrad (12) in der Klemmstellung der Klemmbacken (7) synchron zum Aufnahmekopf (1) antreibbar ist, wobei der Drehantrieb für das Zentralrad (12) entweder eine starre Antriebsverbindung zwischen seinem in Abhängigkeit von der Drehzahl des Antriebsmotors (4) für den Drehantrieb des Aufnahmekopfs (1) ansteuerbaren Antriebsmotor (13) und dem Zentralrad (12) oder ein Überlagerungsgetriebe (16) aufweist, das neben der Ausgangswelle (17) zum Antrieb des Zentralrads (12) zwei Eingangswellen (18, 19) umfasst, die einerseits mit dem Antriebsmotor (4) für den Drehantrieb des Aufnahmekopfs (1) und anderseits mit dem Antriebsmotor (13) für das Zentralrad (12) antriebsverbunden sind, **dadurch gekennzeichnet, dass** die als Spindeltriebe ausgebildeten Linearantriebe (8) durch je ein Getriebe (10) antreibbar sind, dessen Antriebswelle ein mit dem Zentralrad (12) kämmendes Zahnrad (11) trägt, und dass das Zentralrad (12) auf der Antriebswelle (2) des Aufnahmekopfs (1) frei drehbar gelagert ist.

2. Vorrichtung nach Anspruch 1, **dadurch gekennzeichnet, dass** der Aufnahmekopf (1) zusätzliche Spreizbacken (24) zum Innenklemmen eines hohlen Werkstücks (25) aufweist.

3. Vorrichtung nach Anspruch 2, **dadurch gekennzeichnet, dass** die Spreizbacken (24) mittels eines axial verstellbar in der Antriebswelle (2) des Aufnahmekopfs (1) gelagerten Spreizdorns (26) betätigbar sind.

## Claims

1. Device for clamping a workpiece, having a receiving head (1) which is rotatably mounted in a housing (3) and is connected to a rotary drive with a rigid drive connection between a drive motor (4) and the receiving head (1), having clamping jaws (7) which are radially adjustable in the receiving head (1) and are connected to a clamping drive for externally clamping the workpiece, and having linear drives (8) which displace the clamping jaws (7) and form the clamping drive and are jointly driven by a toothed gear with a central wheel (12) coaxial with the drive shaft (2) of the receiving head (1) by means of a separate drive motor (13), wherein the central wheel (12) can be driven synchronously with the receiving head (1) in the clamping position of the clamping jaws (7), wherein the rotary drive for the central wheel (12) having either a rigid drive connection between its drive motor (13), which can be actuated as a function of the rotational speed of the drive motor (4) for the rotary drive of the receiving head (1), and the central wheel (12), or having a superimposed gear unit (16) which, in addition to the output shaft (17) for driving the central wheel (12), has two input shafts (18, 19) which, on the one hand, are drive-connected to the drive motor (4) for the rotary drive of the receiving head (1) and, on the other hand, are drive-connected to the drive motor (13) for the central wheel (12), **characterized in that** the linear drives (8), which are designed as spindle drives, can each be driven by a gear unit (10), the drive shaft of which carries a gearwheel (11) meshing with the central wheel (12), and **in that** the central wheel (12) is mounted freely rotatably on the drive shaft (2) of the receiving head (1).

2. A device according to claim 1, **characterized in that** the receiving head (1) comprises additional expanding jaws (24) for internally clamping a hollow workpiece (25).

3. Device according to claim 2, **characterized in that** the expanding jaws (24) can be actuated by means of an expanding mandrel (26) mounted in an axially adjustable manner in the drive shaft (2) of the receiving head (1).

## Revendications

1. Dispositif de serrage d'une pièce à usiner, comprenant une tête de réception (1) qui est montée de façon rotative à l'intérieur d'un boîtier (3) et qui est raccordée à un mécanisme d'entraînement rotatif pourvu d'une connexion d'entraînement rigide entre un moteur d'entraînement (4) et la tête de réception (1), comprenant des mâchoires de serrage (7) qui peuvent être positionnées dans la direction radiale à l'intérieur de la tête de réception (1), qui sont connectées à un actionneur de serrage et qui sont destinées à la réalisation d'un serrage extérieur de la pièce à usiner, et comprenant des actionneurs linéaires (8) qui positionnent les mâchoires de serrage (7), qui constituent l'actionneur de serrage et qui peuvent être entraînés de façon collective par un moteur d'entraînement séparé (13) par l'intermédiaire d'une transmission par engrenage comportant une roue centrale (12) coaxiale par rapport à un arbre d'entraînement (2) de la tête de réception (1), dans lequel, dans la position de serrage des mâchoires de serrage (7), la roue centrale (12) peut être entraînée de façon synchrone par rapport à la tête de réception (1), et dans lequel le mécanisme d'entraînement rotatif pour la roue centrale (12) comprend soit une connexion d'entraînement rigide entre son moteur d'entraînement (13) et la roue centrale (12), soit une transmission à superposition (16) qui, en plus d'un arbre de sortie (17) destiné à entraîner la roue centrale (12), comprend deux arbres d'entrée (18, 19) qui se trouvent en liaison motrice d'une part avec le moteur d'entraînement (4) pour entraîner de façon rotative la tête de réception (1), et d'autre part avec le moteur d'entraînement (13) pour la roue centrale (12), **caractérisé en ce que** les actionneurs linéaires (8), qui se présentent sous la forme de mécanismes d'entraînement à broche, peuvent être entraînés chacun par un engrenage (10) dont l'arbre d'entraînement porte une roue dentée (11) qui engrène avec la roue centrale (12), et **en ce que** la roue centrale (12) est montée de façon librement rotative sur l'arbre d'entraînement (2) de la tête de réception (1).

2. Dispositif selon la revendication 1, **caractérisé en ce que** la tête de réception (1) comporte des mâchoires d'écartement supplémentaires (24) destinées à réaliser un serrage interne d'une pièce creuse (25).

3. Dispositif selon la revendication 2, **caractérisé en ce que** les mâchoires d'écartement (24) peuvent être actionnées au moyen d'un mandrin d'écartement (26) qui est monté de façon axialement réglable à l'intérieur de l'arbre d'entraînement (2) de la tête de réception (1).
